Europäisches Patentamt

(19) European Patent Office

Office européen des brevets

(11) Veröffentlichungsnummer: **0 010 603**
**B1**

(12) **EUROPÄISCHE PATENTSCHRIFT**

(51) Int. Cl.³: **G 03 B 27/62,** G 03 G 15/00

(45) Veröffentlichungstag der Patentschrift:
**17.11.82**

(21) Anmeldenummer: **79103480.4**

(22) Anmeldetag: **17.09.79**

(54) Durchlaufkopiergerät und Verfahren zum Kopieren von Endlosvorlagen.

(30) Priorität: **05.10.78 DE 2843521**

(43) Veröffentlichungstag der Anmeldung:
**14.05.80 Patentblatt 80/10**

(45) Bekanntmachung des Hinweises auf die Patenterteilung:
**17.11.82 Patentblatt 82/46**

(84) Benannte Vertragsstaaten:
**BE CH FR GB IT NL**

(56) Entgegenhaltungen:
**DE-A-2 620 626**
**DE-A-2 750 252**
**GB-A-1 414 024**
**US-A-4 043 661**

(73) Patentinhaber: **AGFA-GEVAERT Aktiengesellschaft,
D-5090 Leverkusen 1 (DE)**

(72) Erfinder: **Massengeil, Hans A., Isartalstrasse 45a,
D-8000 München 5 (DE)**
Erfinder: **Böck, Georg, Untere Weiden-Strasse 19,
D-8000 München 90 (DE)**
Erfinder: **Steinlehner, Fritz, Am Blankstadl 4,
D-8000 München 90 (DE)**

# Durchlaufkopiergerät und Verfahren zum Kopieren von Endlosvorlagen

Die Erfindung betrifft ein Durchlaufkopiergerät zum Herstellen von Kopieren zweidimensionaler Vorlagen auf blattförmigen Kopieträgern, mit einem streifenförmigen Belichtungsfenster, und mindestens einem Transportwalzenpaar zum Transport der zweidimensionalen Vorlagen über das Belichtungsfenster und mit einer von einem Kopierschalter gesteuerten Walzenanstellvorrichtung zum Schließen der zwischen den einzelnen Kopierzyklen geöffneten Transportwalzenpaare sowie ein Verfahren zum Kopieren von bandförmigen Vorlagen.

Ein derartiges Kopiergerät ist Gegenstand der Druckschrift GB-A-1 414 024.

Es ist das Ziel der vorliegenden Erfindung, ein Durchlaufkopiergerät der eingangs genannten Art in der Weise weiterzubilden, daß bandförmige Vorlagen von einer die Länge der blattförmigen Kopien überschreitenden Länge schnell und lückenlos kopiert werden können. Diese Möglichkeit erscheint insbesondere für das Kopieren von sogenannten Endlosformularen bzw. von in Leporello-Faltung vorliegenden Teilstücken von Computerausdrucken von Bedeutung.

Erfindungsgemäß wird dies durch die den Gegenstand von Anspruch 1 bildende Merkmalskombination erreicht.

Aufgrund dieser Anordnung öffnen sich die Transportwalzen selbsttätig in dem Augenblick, in welchem sich nach Durchlauf einer der Länge der blattförmigen Kopien entsprechenden Kopienlänge noch ein Stück der Vorlage über dem Papierfühler befindet. Dadurch können auch überlange Vorlagen nach Beendigung des Kopiervorganges sofort dem Gerät entnommen werden. Es ist aber auch möglich, alle Teile einer sogenannten Endlosvorlage sukzessive und lückenlos auf Einzelblätter zu übertragen. Hierzu wird die Vorlage jeweils nach Ablichten einer der Blattlänge entsprechenden Vorlagenlänge bei geöffneten Transportwalzen selbsttätig oder von Hand mindestens um die Breite des Belichtungsfensters zurückgesetzt. Der neue Belichtungsvorgang beginnt dann an der Stelle, an welcher der alte Belichtungsvorgang geendet hat.

Der Zusätzliche, vom Kopierschalter unabhängige Steuerschalter erlaubt es, die Transportwalzen für die Vorlage auch nach Durchlauf eines Vorlagenstückes von unternormaler Länge oder beim Auftreten einer die Vorlage gefährdenden Transportstörung ohne Verzögerung zu öffnen.

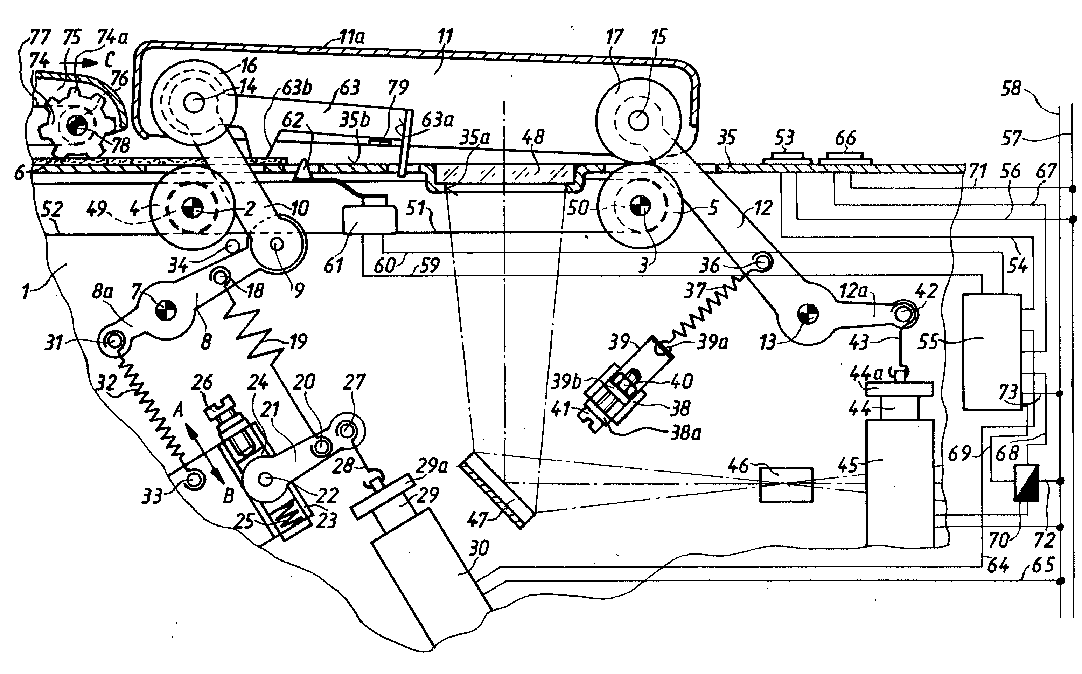

Ausgestaltungen der Erfindung ergeben sich aus den Unteransprüchen und der Beschreibung, worin im folgenden anhand der Zeichnung ein Ausführungsbeispiel erörtert wird. Die einzige Figur zeigt einen Schnitt durch die erfindungsgemäße Vorrichtung.

In der Figur sind in einem Gerätegestell 1 die gerätefesten Achsen 2 und 3 einer Einzugswalze 4 und einer Auszugswalze 5 für eine abzubildende Vorlage 6 gelagert. An einer weiteren gerätefesten Achse 7 sind Schwenkhebel 8 gelagert, welche eine Achse 9 tragen. An der Achse 9 ist ein von Kurbeln 10, einem Koppelglied 11 und Kurbeln 12 gebildetes Viergelenkgetriebe angelenkt. Die Kurbeln 12 dieses Viergelenkgetriebes sind auf einer gerätefesten Achse 13 gelagert. Die Koppelgelenke des Getriebes werden von Achsen 14 und 15 gebildet, von denen die Achse 14 die Lagerachse für die zweite Einzugswalze 16 und die Achse 15 die Lagerachse für die zweite Auszugswalze 17 der Walzenpaare 4, 16 und 5, 17 bildet. Das Koppelglied 11 ist als mit einer Deckplatte 11a ausgestattetes, größtenteils geschlossenes Gehäuse für die schwenkbaren Walzen 16 und 17 ausgeführt.

An einem Stift 18 des Schwenkhebels 8 greift eine Zugfeder 19 mit relativ steiler Federcharakteristik an. Das andere Ende der Zugfeder 19 ist an einem Stift 20 eines Schwenkhebels 21 eingehängt. Der Schwenkhebel 21 ist auf einer Achse 22 gelagert, welche an einem in einem Führungsteil 23 verschiebbaren Schlitten 24 befestigt ist. Der Schlitten 24 wird mittels einer Druckfeder 25 gegen eine Einstellschraube 26 gedrückt. Dadurch kann die Lage der Achse 22 in einstellbarer Weise in Zugrichtung der Feder 19 verstellt werden.

Der Schwenkhebel 21 trägt noch einen weiteren Einhängestift 27, welcher mittels einer Zugstange 26 mit dem Anker 29 eines Elektromagneten 30 verbunden ist. Der Zuganker 29 weist einen Bund 29a auf, welcher zusammen mit der Oberkante 30a des Magneten 30 einen festen Anschlag für den Zuganker 29 bildet.

An einem Arm 8a des Schwenkhebels 8 ist ein Stift 31 befestigt, an welchem eine Zugfeder 32 eingehängt ist. Das andere Ende der Zugfeder 32 ist an einem gerätefesten Stift 33 befestigt. Die Zugfeder 32 zieht den Schwenkhebel 8 so lange gegen einen gerätefesten Anschlagstift 34, bis die Feder 19 mittels des Magneten 29, 30 gespannt wird. In diesem Fall wird, da die Feder 19 wesentlich stärker als die Feder 32 ausgeführt ist, der Schwenkhebel 8 so weit nach unten gezogen, bis die Walze 16 der durch das Oberteil 35 des Gerätes ragenden Walze 4 bzw. der Vorlage 6 anliegt.

Durch entsprechende Einstellung der Einstellschraube 26 bzw. durch Verschieben des Drehpunktes 22 in Pfeilrichtung A−B kann erreicht werden, daß die Feder 19 in dem Augenblick die normale Andruckkraft für die Walze 16 erzeugt, in welchem diese Walze die nicht mit einer Vorlage 6 belegte Walze 4 berührt. Die Einstellung der Andruckkraft erfolgt dabei durch Verkürzung bzw. Verlängerung der Kraftkette zwischen dem Magneten 29, 30 und dem Schwenkhebel 8 aufgrund der durch Verschieben des Drehpunktes 22 bewirkten relativen Verschiebung der Stifte 20 und 27 in Zugrichtung der Feder. Die Charakteristik der Feder 19 ist so ausgelegt, daß nach dem Einlaufen einer dicken Vorlage unter die Einzugswalze 16 und dem dadurch bedingten Anheben dieser Walze sich die Kraft der Feder in einem Maße erhöht, daß die Andurckkraft der Walze 17 aufgrund der Erhöhung der über das Koppelglied 11 auf sie übertragenen Kraftkomponente ausreichend reduziert wird, um das Entstehen eines Einlaufstoßes an dieser Walze zu vermeiden.

Die Andruckkraft für die Ausführwalze 17 wird dadurch erzeugt, daß an einem Stift 36 der Kurbel 12 eine Feder 37 eingehängt ist, deren anderes Ende an einem hochgebogenen Lappen 39a einer in einer Führung 38 langsverschieblichen Lasche 39 eingehängt ist. Durch je einen hochgebogenen Lappen 38a der Führung 38 und 39b der Lasche 39 bzw. eine der Lasche 39b anliegende Mutter 40 ist eine Stellschraube 41 geschraubt, mittels welcher die Feder 37 gespannt werden kann. Auf diese Weise ist es möglich, die Ausgangsspannung der Andruckfeder 37 zu regulieren.

Zum Abschwenken der Auszugswalze 17 ist an einem Stift 42 eines Armes 12a der Kurbel 12 eine Zugstange 43 eingehängt, welche diesen Stift mit dem Zuganker 44 eines Magneten 45 verbindet. Auch hier bildet wieder ein Bund 44a des Zugankers 44 zusammen mit der Oberkante des Magneten 45 einen festen Anschlag für den Zuganker 44. Durch Betätigung des Magneten 44, 45 werden die Kurbeln 12 soweit verschwenkt, daß neben der Walze 17 durch Vermittlung des Koppelgliedes 11 auch die Walze 16 noch weiter von ihrer Unterlage abgehoben und über den Anschlag 79 auch die Anschlagskante 63a aus der Vorlagentransportbahn entfernt wird.

Zur Abbildung der Vorlage 6 auf den nicht dargestellten Aufzeichnungsträger ist ein Abbildungsobjektiv 46 vorgesehen, welches ein im Geräteoberteil 35 ausgebildetes Belichtungsfenster 35a in bekannter Weise auf den bewegten Aufzeichnungsträger abbildet. Im Bereich des Belichtungsfensters 35a ist in die Deckplatte 35 zur Führung der Vorlage 6 eine transparente Auflageplatte 48 eingelegt. Während des Transportes der Vorlage 6 über das Belichtungsfenster 35a werden die gerätefest gelagerten Walzen 4 und 5 mittels über Schnurrollen 49 und 50 gelegten Pesen 51 und 52 mit einer der Geschwindigkeit der Oberfläche des Aufzeichnungsträgers unter Berücksichtigung des Abbildungsmaßstabes proportionalen Geschwindigkeit angetrieben.

Der Kopiervorgang wird mittels eines Kopierschalters 53 eingeleitet, welcher mittels einer Leitung 54 mit einer zentralen Steuereinheit 55 verbunden ist. Ein weiterer Leiter 56 verbindet den Kopierschalter 53 mit einem Leiter 57 einer Netzleitung 57, 58. Die zentrale Steuereinheit 55 ist mittels weiterer Leitungen 59 und 60 mit einem Mikroschalter 61 verbunden, dessen Fühler 62 in die Bahn der Vorlage 6 ragt.

In dem in der Figur dargestellten Ausgangszustand ragt außerdem noch die Anschlagkante 63a eines auf der Achse 14 gelagerten Papieranschlages 63 in diese Transportbahn. Der Papieranschlag 63 weist eine Anschlagsnase 63b auf, welche an einer neben der Vorlagentransportbahn gelegenen Stelle dem Geräteoberteil 35 aufliegt. Dadurch, daß die Anschlagsnase 63b zwischen der Papieranschlagskante 63a und der Achse 14 liegt, bewegt sich die Anschlagskante 63a in dem Augenblick nach oben, in welchem sich die Einzugswalze 16 mit ihrer Achse 14 nach unten absenkt. Der Anschlag 63a wird also mit dem Absenken der Walze 16 bzw. mit dem Schließen des Einzugswalzenpaares 4, 16 selbsttätig aus dem Weg der Vorlage 6 entfernt. Mittels eines Anschlages 79 wird der Papieranschlag 63a auch dann aus dem Weg der Vorlage 6 entfernt, wenn das Koppelglied 11 soweit angehoben ist, daß beide Walzenpaare 4, 16 und 5, 17 geöffnet sind.

Die zentrale Steuereinheit 55 ist so ausgelegt, daß sie durch Drücken der Taste des Kopierschalters 53 die Kopierbereitschaft des Gerätes herstellt. Wird nun eine Vorlage 6 unter der Walze 16 in Richtung auf den Papieranschlag 63a eingeführt, so wird mittels des Fühlers 62 der Mikroschalter 61 betätigt, wodurch die zentrale Steuereinheit 55 den Kopierzyklus des Gerätes einleitet und dabei auch über eine Leitung 64 den Magneten 29, 30 zum Schließen des Einzugswalzenpaares 4, 16 ansteuert. Eine weitere Leitung 65 verbindet den Magneten 30 mit dem Netzleiter 58, wodurch der Stromkreislauf des Magneten geschlossen wird.

Falls während des Kopiervorganges beim Durchlauf der Vorlage durch die Belichtungsstation eine Störung eintritt, durch welche die Gefahr einer Beschädigung der Vorlage entsteht, kann durch Drücken der Taste eines weiteren, am Oberteil 35 angebrachten Schalters 66, welcher mittels einer Leitung 67 mit der zentralen Steuereinheit 55 verbunden ist, das sofortige Öffnen beider Walzenpaare 4, 16 und 5, 17 eingeleitet werden. Die zentrale Steuereinheit steuert dann über eine Leitung 68, in welche ein Halterelais 70 eingeschaltet ist, den Magneten 44, 45 an, welcher die an den Kurbeln 12 gelagerten Auszugswalzen 17 entgegen der Wirkung der Rückholfeder 37 von ihrer Gegenwalze 5 abschwenkt. Über das Koppelglied 11 werden dabei auch die Kurbeln 10 im Uhrzeigersinn verschwenkt, wodurch sich auch das Einzugswalzenpaar 4, 16 öffnet. Zur Schließung der Stromkreise sind sowohl die Taste des Schalters 66 als auch der Haltemagnet 70 über Leitungen 71 und 72 mit dem Netzleiter 58 verbunden. Ein weiterer Netzleiter 73 verbindet die zentrale Steuereinheit 55 mit diesem Netzleiter. Eine das Relais 70 mit der Steuereinheit 55 verbindende Leitung 69 stellt den Haltestromkreis dieses Relais dar, welcher bei erneuter Betätigung des Kopierschalters 53 geöffnet wird.

Bei geöffneten Einzugs- und Auszugswalzen ist nicht nur die Vorlage vor Beschädigungen geschützt und kann zu ihrer Sicherstellung von Hand dem Gerät entnommen werden. Es ist in dieser Lage auch möglich, eine Endlosvorlage unter die Transportwalzen einzuführen und so lange zu verschieben, bis die Stelle, mit deren Ablichtung begonnen werden soll, vor dem Belichtungsfenster 35a zu liegen kommt. Ein erneutes Drücken der Taste des Kopierschalters 53 bringt die Walzen wieder in die in der Figur dargestellte Ausgangsstellung, in welcher der nächste Kopierzyklus, wie geschildert, mittels des Papierfühlers 62 eingeleitet werden kann.

Speziell zum Kopieren von Endlosformularen enthält die zentrale Steuereinheit 55 auch noch Schaltungselemente, welche bewirken, daß die Walzen 16 und 17 von der Vorlage abgeschwenkt werden, falls sich nach dem Ende eines normalen, durch die Länge des verwendeten Kopierpapiers gegebenen Kopierzyklusses noch ein Teil der Vorlage über dem Fühler 62 des Mikroschalters 61 befindet. Schiebt man nun bei geöffneten Walzenpaaren 4, 16 und 5, 17 die Vorlage 6 entgegen der Transportrichtung C um die Breite des Belichtungsfensters 35a zurück und betätigt daraufhin wieder die Taste des Kopierschalters 53, so beginnt die nächste Ablichtung genau an der Stelle, an welcher die vorhergehende Ablichtung geendet hat. Man erhält eine blattweise, lückenlose Ablichtung der Endlosvorlage.

Damit das Rücksetzen der Endlosvorlage nicht von Hand erfolgen muß, ist noch ein perforiertes Transportrad 74 vorgesehen, dessen Achse 78 an einem schwenkbaren Arm 75 gelagert ist und mit seinen Zacken 74a in den in aller Regel perforierten Rand der Endlosvorlagen eingreift. Das Transportrad 74 wird über ein Antriebsrad 76 und eine Pese 77 von einem nicht dargestellten, ebenfalls von der zentralen Steuereinheit 55 gesteuerten Motor, im Falle des selbständigen Öffnens der Transportwalze um ein der Länge des Belichtungsfensters 35a entsprechendes Stück zurückgedreht, sobald die Transportwalzen in der vorher geschilderten Weise von der zentralen Steuereinheit 55 bzw. vom Fühler 62 des Mikroschalters 61 geöffnet wurden.

Selbstverständlich muß im Zusammenhang mit vorstehender Erfindung nicht die vorstehend geschilderte Walzenanstellvorrichtung verwendet werden, bei welcher zur Vermeidung eines Einlaufstoßes am zweiten Walzenpaar die abschwenkbare Walze eines vor dem Belichtungsfenster angeordneten Einzugswalzenpaares mittels Gelenkgetrieben mit der abschwenkbaren Walze eines nach dem Belichtungsfenster angeordneten Auszugswalzenpaares verbunden ist. Es ist ohne weiteres auch möglich, nur ein Walzenpaar oder mehr als zwei vor und nach dem Belichtungsfenster angeordnete Walzenpaare vorzusehen, wobei die abschwenkbaren Walzen jedes Walzenpaares an getrennt angetriebenen Schwenkhebeln gelagert sein können.

## Patentansprüche

1. Durchlaufkopiergerät zum Herstellen von Kopien zweidimensionaler Vorlagen auf blattförmigen Kopieträgern, mit einem streifenförmigen Belichtungsfenster (35a) und mindestens einem Transportwalzenpaar (4, 16; 5, 17) zum Transport der zweidimensionalen Vorlagen über das Belichtungsfenster, und mit einer Walzenanstellvorrichtung (18—32; 36—45), die zum Schließen der zwischen den einzelnen Kopierzyklen geöffneten Transportwalzenpaare veranlaßt werden kann, gekennzeichnet durch folgende Merkmale:

a) Es ist eine zentrale Steuereinheit (55) vorhanden;

b) die zentrale Steuereinheit ist mit dem Kopierschalter (53), der Walzenanstellvorrichtung (18—32; 36—45) und einem mit einem Papierfühler (61) versehenen Schalter (62) verbunden;

c) die Steuereinheit ist so ausgelegt, daß bei betätigtem Kopierschalter das Vorhandensein einer Vorlage am Papierfühler den Kopiervorgang auslöst;

d) die Steuereinheit ist ferner so ausgelegt, daß die Walzenanstellvorrichtung im Sinne einer Öffnung der beiden Transportwalzenpaare (4, 16; 5, 17) betätigt wird, falls nach Durchlauf einer der Länge der blattförmigen Kopien entsprechenden Vorlagenlänge noch ein Teil der Vorlage am Papierfühler vorhanden ist.

2. Kopiergerät nach Anspruch 1, dadurch gekennzeichnet, daß mit der zentralen Steuereinheit (55) ein weiterer Schalter (66) verbunden ist, dessen Betätigung, unabhängig von der Stellung des Kopierschalters (53) und des mit dem Papierfühler (61) versehenen Schalters (62) die Walzenanstellvorrichtung (18—32; 36—45) im Sinne einer Öffnung der beiden Transportwalzenpaare (4, 16; 5, 17) steuert.

3. Kopiergerät nach Anspruch 1 oder 2, dadurch gekennzeichnet, daß eine nach dem Ende des Durchlaufes einer der Länge der blattförmigen Kopien entsprechenden Vorlagenlänge die Vorlage (6) um mindestens die Breite des streifenförmigen Belichtungsfensters (35a) zurücksetzende Transportvorrichtung (74) für die Vorlage vorgesehen ist.

4. Verfahren zum Herstellen von blattförmigen Kopien von bandförmigen Vorlagen, deren Länge die der blattförmigen Kopien übersteigt, auf einem Durchlaufkopiergerät nach einem der Ansprüche 1 bis 3, dadurch gekennzeichnet, daß die bandförmige Vorlage jeweils nach Durchlauf einer der Länge des blattförmigen Kopieträgers entsprechenden Vorlagenlänge um ein mindestens der Breite des Belichtungsfensters (35a) entsprechendes Stück entgegen der Einzugsrichtung (e) der bandförmigen Vorlage zurückgesetzt wird.

## Claims

1. Continuous copying apparatus for producing copies of two-dimensional originals on copy supports in the form of sheets, having a strip-shaped exposure window (35a), and at least one pair of transport rollers (4, 16; 5, 17) for transporting the two-dimensional originals across the exposure window and having a roller-positioning device (18−32; 36−45) which can be made to close the pairs of transport rollers opened between individual copying cycles, characterised by the following features:

a) there is a central control unit (55);
b) the central control unit is connected to the copying switch (53), the roller-positioning device (18−32; 36−45) and a switch (62) provided with a paper feeler (61);
c) the control unit is designed in such a manner that, when the copying switch is actuated, the presence of an original at the paper feeler triggers the copying operation;
d) the control unit is designed also in such a manner that the roller-positioning device is actuated in the sense of an opening of the two pairs of transport rollers (4, 16; 5, 17), if, after the run-through of a length of the original corresponding to the length of the copies in the form of sheets, a portion of the original is still at the paper feeler.

2. Coyping apparatus according to claim 1, characterised in that there is connected to the central control unit (55) a further switch (66), the actuation of which, independently of the position of the copying switch (53) and of the switch (62) provided with the paper feeler (61), controls the roller-positioning device (18−32; 36−45) in the sense of an opening of the two pairs of transport rollers (4, 16; 5, 17).

3. Copying apparatus according to claim 1 or 2, characterised in that there is provided for the original a transport device (74) which, after the end of a run-through of a length of the original corresponding to the length of the copies in the form of sheets, moves the original (6) back by at least the width of the strip-shaped exposure window (35a).

4. Method for the production of copies in the form of sheets from originals in the form of a band, the length of which band exceeds that of the copies in the form of sheets, on a continuous copying apparatus according to one of claims 1 to 3, characterised in that, after each run-through of a length of the original corresponding to the length of the copy support in the form of a sheet, the original in the form of a band is moved back contrary to the intake direction (e) of the original in the form of a band by a portion corresponding at least to the width of the exposure window (35a).

## Revendications

1. Photocopieur en continu pour réaliser des copies d'originaux en deux dimensions sur des supports de copie en forme de feuille, comprenant une fenêtre (35a) d'exposition en forme de bande et au moins un couple (4, 16; 5, 17) de rouleaux de transport pour le transport des originaux en deux dimensions sur la fenêtre d'exposition, et un dispositif (18 à 32; 36 à 45) de mise en place des rouleaux, qui peut être manoeuvré pour fermer les couples de rouleaux de transport ouverts entre les cycles de copiage, caractérisé par les caractéristiques suivantes:

a) il y a une unité (55) de commande centrale;
b) l'unité de commande centrale est reliée à l'interrupteur (53) de copiage, au dispositif (18 à 32; 36 à 45) de mise en place des rouleaux et à un interrupteur (62) muni d'un détecteur (61) de papier;
c) l'unité de commande est conçue de manière à ce que, lorsque l'interrupteur de copiage est manoeuvré, la présence d'un original sur le détecteur de papier déclenche le processus de copiage;
d) l'unité de commande est en outre conçue de manière à ce que le dispositif de mise en place des rouleaux soit manoeuvre dans le sens d'une ouverture des deux couples (4, 16; 5, 17) de rouleaux de transport, dans le cas où, après passage d'une longueur d'original correspondant à la longueur des copies en forme de feuille, une partie de l'original est encore présente sur le détecteur de papier.

2. Photocopieur duivant la revendication 1, caractérisé en ce qu'à l'unité (55) centrale de commande est relié un autre interrupteur (66), dont la manoeuvre commande, indépendamment de la position de l'interrupteur (53) de copiage et de l'interrupteur (62) muni du détecteur (61) de papier, le dispositif (18 à 32; 36 à 45) de mise en place des rouleaux dans le sens d'une ouverture des deux couples (4, 16; 5, 17) de rouleaux de transport.

3. Photocopieur suivant la revendication 1 ou 2, caractérisé en ce qu'il est prévu pour l'original un dispositif (74) de transport ramenant l'original (6) d'au moins la largeur de la fenêtre (35a) d'exposition en forme de bande après la fin du passage d'une longueur d'original correspondant à la longueur des copies en forme de feuille.

4. Procédé pour réaliser des copies en forme de feuille d'originaux en forme de bande, dont la longueur dépasse celle des copies en forme de feuille, sur un photocopieur en continu suivant l'une des revendications 1 à 3, caractérisé en ce qu'il consiste à ramener l'original en forme de bande dans le sens opposé à son sens (c) d'introduction sur une partie correspondant au moins à la largeur de la fenêtre (35a) d'exposition, après chaque passage d'une longueur d'original correspondant à la longueur du support de copie en forme de feuille.